# EUROPÄISCHE PATENTSCHRIFT

(11) **EP 4 047 060 B1**
(45) Veröffentlichungstag und Bekanntmachung des Hinweises auf die Patenterteilung: **14.02.2024**
(21) Anmeldenummer: 21158287.9
(22) Anmeldetag: 19.02.2021
(51) Int. Cl.: C09D 5/00

(54) **WÄSSRIGER BESCHICHTUNGSSTOFF, BESCHICHTUNG, ERHALTEN AUS DEM BESCHICHTUNGSSTOFF, UND SUBSTRAT ENTHALTEND DIE BESCHICHTUNG**
AQUEOUS COATING MATERIAL, COATING OBTAINED FROM THE COATING MATERIAL, AND SUBSTRATE CONTAINING THE COATING
MATIÈRE AQUEUSE DE REVÊTEMENT, REVÊTEMENT OBTENU À PARTIR DE LA MATIÈRE DE REVÊTEMENT ET SUBSTRAT CONTENANT LE REVÊTEMENT

(43) Veröffentlichungstag der Anmeldung: 24.08.2022
(73) Patentinhaber: DAW SE, 64372 Ober-Ramstadt (DE)
(72) Erfinder: BRENNER, Thomas, 64367 Mühltal (DE); WESTMEIER, Johannes, 35112 Fronhausen (DE); GROßKOPF, Jan, 64367 Mühltal (DE); EIGENBRODT, Dirk, 64397 Modautal (DE)
(74) Vertreter: Metten, Karl-Heinz

(56) Entgegenhaltungen:
- EP-A1- 1 978 063
- WO-A1-2012/123772
- WO-A1-2020/082257
- DE-A1-102007 031 960
- JP-A- 2008 133 479
- US-A1- 2005 020 763

## Beschreibung

Die vorliegende Erfindung betrifft einen wässrigen Beschichtungsstoff sowie eine Beschichtung, erhalten aus diesem Beschichtungsstoff, und ein Substrat enthaltend die erfindungsgemäße Beschichtung.

Wässrige Beschichtungsstoffe sind dem Fachmann hinlänglich bekannt. Derartige wässrige Beschichtungsstoffe verfügen häufig über organische Bestandteile, beispielsweise in Form von polymeren organischen Bindemitteln. Organische Bestandteile setzen diese wässrigen Beschichtungsstoffe allerdings der Gefahr des Befalls mit Mikroorganismen aus. Nicht selten werden daher Konservierungsmittel zugesetzt, um die Lagerfähigkeit von wässrigen Beschichtungsstoffen zu erhöhen. Um auch zu solchen wässrigen Beschichtungsstoffen zu gelangen, die für Allergiker ohne weiteres genutzt werden können, hat es nicht an Versuchen gefehlt, organische Biozide in wässrigen Beschichtungsstoffen zu eliminieren, ohne Einbußen bei den Nutzungseigenschaften in Kauf nehmen zu müssen.

Ein solcher Ansatz geht dahin, eine biozide bzw. biostatische Wirkung dadurch zu erreichen, dass man wässrige Beschichtungssysteme mit sehr hohen pH-Werten ausstattet, beispielsweise im Bereich von 8,5 bis 12,0.

Allerdings hat es sich vielfach als problematisch erwiesen, diese hohen pH-Werte über die Dauer der Lagerung bis zum tatsächlichen Einsatz beizubehalten. Dies soll gemäß der DE 100 30 447 für konservierungsmittelfreie Dispersionsfarben durch den Zusatz von Wasserglas in geeigneten Mengen gelingen. Die auf diese Weise zugänglichen Dispersionsfarben sollen sich neben einer ausreichenden Lagerstabilität durch gute Verarbeitungseigenschaften auszeichnen. In der DE 10 2014 013 455 werden ebenfalls konservierungsmittelfreie Dispersionsfarben offenbart, deren biostatische bzw. biozide Wirkung auf die Einstellung hoher pH-Werte zurückgeht. Um den pH-Wert über einen längeren Zeitraum konstant hoch zu halten, wird vorgeschlagen, anstelle von Wasserglas geeignete Mengen an Alkalialkylsiliconaten einzusetzen.

Die WO 2012/123772 A1 offenbart eine Zusammensetzung für eine wässerige dämmschichtbildende Brandschutzbeschichtung, die mindestens eine Silikonharzemulsion als Bindemittel und ein im Brandfall schaumbildendes Mittel umfasst. Eine solche Zusammensetzung soll nach der Aufbringung als Brandschutzbeschichtung eine verbesserte Bewitterungsstabilität aufweisen.

Die DE 10 2007 031960A1 stellt auf ein Weißpigment für Anstrichmittel enthaltend kristallines Aluminiumorthophosphatdihydrat ab. Anstrichmittel mit einem solchen Weißpigment sollen den Löse- und Bindemittelbedarf reduzieren, was zu einer verminderten Verdickung und einer höheren Abriebfestigkeit des Anstrichmittels führe.

Die EP 1 978 063 A1 offenbart eine wässrige Dispersion zur Verwendung bei der Herstellung einer hydrophoben Beschichtung. Ein solche wässrige Dispersion umfasst anorganische Teilchen, mindestens eine Fettsäure oder ein Salz davon, ein polymeres Bindemittel und Wasser. Die anorganischen Partikel sollen vorzugweise basisch sein. Mit solchen Dispersionen soll eine effektive Hydrophobierung von Oberflächen möglich sein.

Die US 2005/020763 A1 zeigt eine wässrige Beschichtungszusammensetzung, umfassend die Komponenten a) bis f). Hier handelt es sich bei der Komponente a) um 10 bis 60 Gew.-% einer wässrigen Dispersion, die Wasser und mindestens ein wasserverdünnbares Bindemittel enthält, das aus der Gruppe ausgewählt ist, die aus Polymethacryl-, Polyacryl-, Polyester- oder Polyurethanbindemitteln oder aus Polyacryl/Polyester- oder Polyacryl/Polyurethan-Hybridbindemitteln oder epoxidmodifizierten Bindemitteln mit linearer, verzweigter oder sternförmiger Struktur und Mischungen davon besteht, wobei die Menge des Wassers mindestens 15 Gew.-%, bezogen auf das Gesamtgewicht der Komponente ausmacht. Bei der Komponente b) handelt es sich um 5 bis 40 Gew.-% mindestens eines wasserdispergierbaren Polyisocyanats oder Mischungen aus wasserdispergierbaren und wasseremulgierbaren Polyisocyanaten, blockiert oder unblockiert. Bei der Komponente c) handelt es sich ferner um 5 bis 70 Gew.-% eines Füllstoffs, bei der Komponente d) um 1 bis 40 Gew.-% eines gemahlenen Polymermaterials, bei der Komponente e) um 0 bis 15 Gew.-% organische Co-Lösungsmittel, bei der Komponente f) um 0,01 bis 15 Gew.-% an Zusatzstoffen, Pigmenten und Füllstoffen und bei der Komponente f) schließlich um 3 bis 30 Gew.-% Wasser. Eine solche Beschichtung soll Oberflächen mit einem ästhetischen Aussehen zugänglich machen, wobei als beschichtete Gegenstände beispielsweise Arbeitsplatten und Wandpaneele für Möbel, für Fußböden und für alle Arten von verschiedenen Gegenständen in Frage kommen.

Die JP 2008 133479 A1 offenbart eine wässrige Beschichtungszusammensetzung eines Harzes auf Olefinbasis. Eine solche Beschichtung soll eine Haftung auf einem Substrat ermöglichen, Antifouling-Eigenschaften aufweisen und schlagabriebfest sein sowie einen hohen Glanz aufweisen.

Die WO 2020/082257 A1 stellt ab auf eine wässrige Dispersion, umfassend i) ein Emulsionspolymer, umfassend, bezogen auf das Gewicht des Emulsionspolymers, 30 bis 80% Struktureinheiten eines Weichalkyl(meth)acrylats mit einem biobasierten Gehalt von mehr als 30 bis 60 %; mehr als 5 % bis 30 %Struktureinheiten eines C8-C16-Alkyl(meth)acrylats mit einem biobasierten Gehalt von mehr als 60 %, 0,1 % bis 10 % Struktureinheiten eines funktionellen Acetoacetoxy- oder Acetoacetamid-Monomers, 0,1 % bis 10 % Struktureinheiten eines ethylenisch ungesättigten Monomers, das mindestens eine funktionelle Gruppe trägt, die ausgewählt ist aus Carboxyl, Carbonsäureanhydrid, Sulfonsäure, Amid, Sulfonat, Phosphonat, Phosphat, Hydroxyl, Ureido oder Kombinationen davon; 0 bis 50 % Struktureinheiten eines harten Acrylmonomers; und 0 bis 3 % Struktureinheiten eines (meth)acrylfunktionellen Silans; und ii) 0 bis 3 Gew.-% eines epoxyfunktionellen Silans, bezogen auf das Gewicht des Emulsionspolymers, wobei das epoxyfunktionelle Silan und die Struktureinheiten des (meth)acrylfunktionellen Silans in einer kombinierten Menge von 0,05 bis 3 Gew.-%, bezogen auf das Gewicht des Emulsionspolymers, vorhanden sind. Ein solche Dispersion soll ein biobasiertes Bindemittel für die Verwendung in wässrigen Beschichtungszusammensetzungen zugänglich machen.

Der gewünschte hohe pH-Wert wird durch die Zugabe geeigneter Mengen an Basen erzielt. Hierbei ist regelmäßig darauf zu achten, zu hohe pH-Werte, beispielsweise größer 12, zu vermeiden. Denn wässrige Beschichtungsstoffe, die zu stark alkalisch sind, können bedingt durch behördliche Auflagen im Allgemeinen nur unter Beachtung bestimmter Schutzmaßnahmen appliziert werden.

Der vorliegenden Erfindung hat demgemäß die Aufgabe zugrunde gelegen, wässrige Beschichtungsstoffe zur Verfügung zu stellen, die nicht mehr mit den Nachteilen des Stands der Technik behaftet sind und die insbesondere einen initial eingestellten alkalischen pH-Wert über einen möglichst langen Zeitraum beibehalten. Der vorliegenden Erfindung lag insbesondere auch die Aufgabe zugrunde, im Wesentlichen konservierungsmittelfreie wässrige Beschichtungsstoffe verfügbar zu machen, die eine ausreichende Lagerfähigkeit besitzen.

Demgemäß wurde ein wässriger Beschichtungsstoff mit einem pH-Wert im Bereich von 8,5 bis 12,5 oder eingestellt auf einen pH-Wert im Bereich von 8,5 bis 12,5 gefunden, bestehend aus oder umfassend
a) mindestens ein polymeres organisches Bindemittel auf Dispersionsbasis,
b) mindestens einen Alumino-Hydroxokomplex,
c) mindestens ein Additiv und
d) Wasser sowie
e) gegebenenfalls mindestens einen Füllstoff.

Erfindungsgemäße Beschichtungsmassen enthalten in einer zweckmäßigen Ausführungsform, insbesondere solche für Dispersionsfarben, regelmäßig mindestens einen Füllstoff. Diese wässrigen Beschichtungsmassen verfügen demgemäß über einen pH-Wert im Bereich von 8,5 bis 12,5 oder sind eingestellt auf einen pH-Wert im Bereich von 8,5 bis 12,5 und bestehen aus oder umfassen a) mindestens ein polymeres organisches Bindemittel auf Dispersionsbasis, b) mindestens einen Alumino-Hydroxokomplex, c) mindestens ein Additiv und d) Wasser sowie e) mindestens einen Füllstoff. Erfindungsgemäße Beschichtungsmassen enthalten in einer weiteren zweckmäßigen Ausführungsform, insbesondere solche für Vlieskleber, regelmäßig keinen Füllstoff. Diese wässrigen Beschichtungsmassen verfügen demgemäß über einen pH-Wert im Bereich von 8,5 bis 12,5 oder sind eingestellt auf einen pH-Wert im Bereich von 8,5 bis 12,5 und bestehen aus oder umfassen a) mindestens ein polymeres organisches Bindemittel auf Dispersionsbasis, b) mindestens einen Alumino-Hydroxokomplex, c) mindestens ein Additiv und d) Wasser.

Der pH-Wert der erfindungsgemäßen Beschichtungsstoffe liegt bevorzugt im Bereich von 10,0 bis 12,0 und besonders bevorzugt im Bereich von 10,5 bis 11,5 bzw. wird bevorzugt auf einen pH-Wert im Bereich von 10,0 bis 12,0 und besonders bevorzugt im Bereich von 10,5 bis 11,5 eingestellt. Der pH-Wert lässt sich hierbei ermitteln gemäß DIN 55659-1:2012-1 bei einer Temperatur von 23 ± 2 °C. Hierfür können pH-Elektroden mit Glasmembran verwendet werden. Ein geeignetes pH-Meter ist zum Beispiel das Messgerät SevenEasy (Messbereich pH 0,00-14,00) der Firma Mettler Toledo unter Verwendung der Elektrode InLab ExpertPro (Best.-Nr.: 51343101), ebenfalls von der Firma Mettler Toledo. Für die Einstellung des pH-Werts kann auf sogenannte pH-Einstellmittel zurückgegriffen werden. Geeignete pH-Einstellmittel umfassen zum Beispiel Alkalihydroxide wie Natriumhydroxid, beispielsweise in Form von Natronlauge, und/oder Kaliumhydroxid wie auch flüchtige Neutralisationsmittel wie eine Ammoniaklösung und/oder Amine wie 2-Amino-2-methyl-1-propanol und/oder 2-Amino-2-ethyl-1,3-propandiol.

Für die erfindungsgemäßen wässrigen Beschichtungsstoffe kann unter den geeigneten Füllstoffen auf anorganische carbonatische Füllstoffe, silikatische Füllstoffe und deren beliebige Mischungen zurückgegriffen werden. Dabei können geeignete anorganische carbonatische Füllstoffe ausgewählt werden aus der Gruppe bestehend aus Calciumcarbonat, Dolomiten, Calciten, Aragoniten und beliebigen Mischungen dieser Füllstoffe. Unter den silikatischen Füllstoffen wird bevorzugt zurückgegriffen auf solche ausgewählt aus der Gruppe bestehend aus Quarziten, Schichtsilikaten, Feldspaten, Cristobalit, Vulkaniten, Kieselerden, insbesondere Kaolin, Schaumglaskugeln, Aluminiumsilikathohlkugeln, geblähten Tonkugeln und beliebigen Mischungen hiervon.

In zweckmäßigen Ausführungsformen verfügen die erfindungsgemäßen Beschichtungsstoffe, sofern darin vorhanden, über anorganische carbonatische Füllstoffe von nicht mehr als 55 Gewichtsprozent, bevorzugt nicht mehr als 40 Gewichtsprozent und besonders bevorzugt nicht mehr als 30 Gewichtsprozent, jeweils bezogen auf das Gesamtgewicht der erfindungsgemäßen Beschichtungsstoffe. In einer besonders bevorzugten Ausführungsform sind die erfindungsgemäßen wässrigen Beschichtungsstoffe im Wesentlichen frei oder frei von anorganischen Carbonaten, insbesondere von jeglichen Carbonaten, oder weisen jedenfalls nur noch eine geringe Menge an anorganischen Carbonaten bzw. Carbonaten auf. In einer weiteren bevorzugten Ausführungsform sind die erfindungsgemäßen wässrigen Beschichtungsstoffe im Wesentlichen frei oder frei von anorganischen Carbonaten und verfügen über mindestens einen silikatischen Füllstoff.

Das polymere organische Bindemittel auf Dispersionsbasis kann in einer bevorzugten Ausführungsform ausgewählt werden aus der Gruppe bestehend aus Vinylacetat/EthylenCopolymeren, Copolymeren auf Basis von Vinylaromaten, insbesondere gebildet aus Styrol und (Meth)acrylaten, Copolymeren auf Basis von Acrylaten und gegebenenfalls Methacrylaten, insbesondere Reinacrylate, und beliebigen Mischungen hiervon. Reinacrylate umfassen Homo- und insbesondere Copolymere von (Meth)acrylaten, d.h. Acrylaten und/oder Methacrylaten, gegebenenfalls auch mit (Meth)acrylsäure, d.h. Acryl- und/oder Methacrylsäure, als Comonomerbausteine. Besonders bevorzugt kommen bei den erfindungsgemäßen Beschichtungsstoffen wässrige Dispersionen auf Basis von Vinylacetat/EthylenCopolymeren und Copolymeren auf Basis von Vinylaromaten, insbesondere Styrol, und (Meth)acrylaten, vorzugsweise Styrol/Acrylat-Copolymere, zum Einsatz. Als organische Bindemittel kann demgemäß grundsätzlich zurückgegriffen werden auf solche, bei denen die in Wasser dispergierten oder dispergierbaren Polymere aus gleichen oder verschiedenen Monomeren gebildet sind, wobei mindestens eines der Monomere ein Acrylsäureester, Methacrylsäurester, Acrylsäure, Methacrylsäure, Vinylacetat, Vinylchlorid, Versatat, Acrylitril oder eine vinylaromatische Verbindung darstellt. In einer zweckmäßigen Ausgestaltung basiert das in Wasser dispergierte oder dispergierbare Polymer dabei auf i) (Meth)acrylsäureestern, insbesondere Acrylsäureestern, und Vinylaromaten, insbesondere Styrol, oder auf ii) (Meth)acrylsäureestern, insbesondere Acrylsäureestern, und Vinylestern mindestens einer Koch-Säure, insbesondere der Versatinsäure, und gegebenenfalls Vinylaromaten, insbesondere Styrol. Das organische Bindemittel umfasst in einer bevorzugten Ausführungsform in wässriger Dispersion vorliegende sphärische bzw. kugelförmige Kunststoffpartikel mit einem durchschnittlichen Durchmesser kleiner 3 µm, vorzugsweise kleiner 2 µm, besonders bevorzugt kleiner 1 µm, insbesondere enthaltend oder gebildet aus mindestens einem Acrylat-, Styrol-, insbesondere Styrolacrylat-, Vinylacetat-, Vinylpropionat- und/oder Urethanhomo- und/oder -copolymeren oder einer beliebigen Mischung hiervon. Die genannten Kunststoffpartikel bzw. -kugeln weisen in einer besonders zweckmäßigen Ausgestaltung einen durchschnittlichen Durchmesser kleiner 500 nm, insbesondere kleiner 250 nm oder 200 nm, beispielsweise im Bereich von 150 nm, auf. Das vorangehend spezifizierte organische Bindemittel liegt in einer bevorzugten Ausgestaltung in Form einer Styrol/Acrylat-Copolymerdispersion vor.

Die der Erfindung zugrunde liegende Aufgabe wird mit solchen wässrigen Beschichtungsstoffen besonders zufriedenstellend gelöst, bei denen der mindestens eine Alumino-Hydroxokomplex über einen pKs-Wert in Wasser im Bereich von 10,5 bis 12,5 bei 23 °C verfügt. Bei dem Alumino-Hydroxokomplex kann es sich um einen binären oder einen ternären Alumino-Hydroxokomplex oder um einen Alumino-Hydroxokomplex höherer Ordnung handeln. Hierbei bildet eine Hydroxo-Gruppe (OH) in einen Teil der direkten Koordinationssphäre des Alumino-Hydroxokomplexes. Bevorzugt handelt es sich um eine Verbindung der Formel Mx[Al(OH)y]_{z} mit M = Na, K und/oder Ca und 1 ≥ x ≤ 6,4 ≥ y ≤ 6 und 1 ≥ z ≤ 2. Unter geeignete Alumino-Hydroxokomplexe, insbesondere auch solche im Einklang mit der vorangehenden Summenformel, fallen im Sinne der Erfindung auch Komplexsalze. Geeignete Alumino-Hydroxokomplexe lassen sich z.B. durch Auflösen von NaA-lO₂ in Wasser erhalten. Hierbei bildet sich der wasserlösliche Alumino-Hydroxokomplex Na[Al(OH)4], welcher im Sinne der Erfindung einen besonders bevorzugten Alumino-Hydroxokomplex darstellt.

Die für die erfindungsgemäßen wässrigen Beschichtungsstoffe eingesetzten Additive können in einer zweckmäßigen Ausgestaltung ausgewählt werden aus der Gruppe bestehend aus Entschäumern, Stabilisatoren, insbesondere pH-Stabilisatoren, Hydrophobierungsmitteln, Wachsen, Mattierungsmitteln und beliebigen Mischungen hiervon.

Besonders geeignete Mattierungsmittel umfassen Kieselsäure, insbesondere Fällungskieselsäure, Aluminiumnatriumsalzen, Diatomene oder beliebige Mischungen hiervon. Silikatische Mattierungsmittel sind besonders bevorzugt.

Besonders geeignete Hydrophobierungsmittel können ausgewählt werden aus der Gruppe bestehend aus Alkylalkoxysilanen, Alkylalkoxysiloxanen, wasserlöslichen Alkysilikonaten, Monoalkylsilantriol, Dialkylsilandiol, Trialkylsilanol, den Alkalisalzen von Monoalkylsilantriol, Dialkylsilandiol und Trialkylsilanol, und beliebigen Mischungen hiervon.

Unter geeignete Stabilisatoren im Sinne der vorliegenden Erfindung fallen insbesondere pH-Stabilisatoren, Polysiloxane sowie Stabilisatoren auf Basis von Polyacrylsäure, Polyoxyethylen oder Sorbitanmonooleat.

Geeignete pH-Stabilisatoren umfassen zum Beispiel Amine und Aminderivate, z.B. stickstoffhaltige Komplexierungsmittel, insbesondere mehrzähnige Komplexierungsmittel wie EDTA und/oder N,N,N',N'-Tetrakis(2-hydroxypropyl)-ethylendiamin.

Geeignete Wachse umfassen Polyolefinwachse, insbesondere Polypropylenwachse und/oder Polyethylenwachse, z.B. HDPE-Wachse, Paraffinwachse, Montanwachse, Carnaubawachse, Amidwachse, PTFE-Wachse, Silikonwachse, Wachse auf der Basis niedermolekularer Copolymere von Ethylen und Acrylsäure und/oder Acrylaten, natürliche Wachse, z.B. Bienenwachs und/oder Paraffinwachse, und beliebige Mischungen der vorangehend genannten Wachse. In besonders zweckmäßigen Ausführungsformen können die erfindungsgemäßen Beschichtungsstoffe auch f) mindestens ein Pigment, g) mindestens einen Verdicker, h) mindestens ein Dispergiermittel und/oder i) mindestens einen Faserstoff enthalten.

Unter den für die erfindungsgemäßen Beschichtungsstoffe zum Einsatz kommenden Verdickern sind solche bevorzugt, die ausgewählt sind aus der Gruppe bestehend aus Polyacrylat-Verdickern, Polyurethan-Verdickern, Polyharnstoff-Verdickern, Cellulose-Verdickern, Polyvinylalkohol-Verdickern, Polyetherpolyol-Verdickern, Assoziativverdickern, insbesondere Polyurethan-modifizierten Assoziativverdickern, Schichtsilikat-Verdickern, Polysaccharid-Verdickern, insbesondere Xanthan, und beliebigen Mischungen hiervon.

Geeignete Verdicker auf Cellulose-Basis umfassen z.B. Cellulose, mikrokristalline Cellulose, Celluloseether und modifizierte Celluloseether, z.B. hydrophob modifizierte Celluloseether, wobei insbesondere Hydroxyethylcellulose, Methylhydroxyethylcellulose und/oder Methylcellulose besonders bevorzugt sind. Geeignete Polysaccharide umfassen z.B. solche auf Basis von Carrageen, Guarkernmehl, Xanthan und Johannisbrotkernmehl.

Unter den Acrylatverdickern sind auch sogenannte HASE-Verdicker (hydrophobically modified alkali soluble emulsion) geeignet, und zwar insbesondere auf Basis von Copolymeren enthaltend oder bestehend aus Methylmethacrylat und/oder Methacrylsäure und Ethylacrylat. HASE-Verdicker können z.B. gewonnen werden aus Methacrylsäure als hydrophilem Monomer, einem Alkylvinylether als hydrophobem Monomer sowie Ethylacrylat, Butylacrylat und/oder Methylmethacrylat als weiterem Monomer zur Einstellung eines optimalen Gleichgewichts zwischen Wasserempfindlichkeit und Wasserverträglichkeit. Auch können vernetzte HASE-Verdicker eingesetzt werden.

Besonders geeignete Dispergiermittel umfassen polyanionische Dispergiermittel. Diese können insbesondere ausgewählt sein aus der Gruppe bestehend aus Polycarboxylaten, insbesondere Salze von Polyacrylsäuren, Polyphosphaten, insbesondere lineare Polyphosphate und/oder zyklische Metaphosphate, und beliebigen Mischungen hiervon, wobei die Salze von Polyacrylsäuren besonders bevorzugt sind.

Geeignete Faserstoffe, sofern diese in den erfindungsgemäßen Beschichtungsstoffen zum Einsatz kommen, sind zweckmäßigerweise ausgewählt aus der Gruppe bestehend aus Cellulosefasern, Glasfasern, Polyolefinfasern, insbesondere PE-Fasern und/oder PP-Fasern, PAN-Fasern, Carbonfasern, Hanffasern, Strohfasern, Schilffasern, Holzweichfasern und deren beliebigen Mischungen. Besonders bevorzugt wird auf Cellulo-sefasern und/oder Glasfasern zurückgegriffen.

Als geeignete Pigmente seien exemplarisch anorganische Pigmente wie Bunt-, Schwarz- und Weißpigmente (Farbpigmente) sowie Glanzpigmente und organische Pigmente wie Bunt- und Schwarzpigmente genannt. Als geeignete anorganische Weißpigmente kommen zum Beispiel Titandioxid, insbesondere Rutil, Zinkweiß, Farbenzinkoxid; Zinksulfid und/oder Lithopone in Betracht. Unter den anorganischen Schwarzpigmenten kann zum Beispiel ausgewählt werden unter Eisenoxidschwarz, Eisen-Mangan-Schwarz, Spinellschwarz und/oder Ruß. Als geeignete anorganische Buntpigmente kann zum Beispiel zurückgegriffen werden auf Chromoxid, Chromoxidhydratgrün, Chromgrün, Cobaltgrün, Ultramaringrün, Kobaltblau, Ultramarinblau, Manganblau, Ultramarinviolett, Kobalt- und Manganviolett, Eisenoxidrot, Cersulfid, Molybdatrot, Ultramarinrot, Eisenoxidbraun, Mischbraun, Spinell- und Korundphasen, Chromtitangelb, Zinnzinktitanat, Chromorange, Eisenoxidgelb, Nickeltitangelb, Chromgelb und/oder Bismutvanadat. Unter den genannten Pigmenten umfassen besonders geeignete Pigmente zum Beispiel Titandioxid, insbesondere Rutil, Zinksulfid, Zinkoxid, Baryt, Ruß, Eisenoxid, Chromoxid, Kobaltblau, Spinellpigment, Nickeltitanat, Chromtitanat und deren beliebige Mischungen.

Die erfindungsgemäßen wässrigen Beschichtungsstoffe zeichnen sich in bevorzugten Ausführungsformen auch dadurch aus, dass sie im Wesentlichen frei von Topfkonservierungsmitteln und/oder im Wesentlichen frei von Filmkonservierungsmitteln sowie besonders bevorzugt frei von jeglichen organischen Konservierungsmitteln sind. Diese bevorzugten erfindungsgemäßen Beschichtungsmassen verfügen daher nicht über organische Biozide, insbesondere nicht über Topfkonservierungsmittel. Eine erfindungsgemäße Beschichtungsmasse ist im Sinne der Erfindung auch dann als im Wesentlichen frei von organischen Konservierungsmitteln, insbesondere Topfkonservierungsmitteln, anzusehen, wenn für deren Herstellung auf handelsübliche Komponenten zurückgegriffen wird, deren Lieferformen organische Biozide, insbesondere Topfkonservierungsmittel, beinhalten. Die erfindungsgemäßen Beschichtungsmassen sind insbesondere dann als im Wesentlichen frei an organischen Bioziden bzw. organischen Konservierungsmitteln zu betrachten, wenn nach Maßgabe der "Vergabegrundlage für Umweltzeichen" der RAL gGmbH für "Emissionsarme Innenwandfarben RAL DE-UZ 102" (Ausg. Januar 2019) keine organischen Biozide oder organischen Konservierungsmittel darin enthalten sind oder, jeweils bezogen auf die Einzelsubstanz einschließlich Formaldehyd, nicht mehr als 2 ppm, ganz besonders bevorzugt nicht mehr als 1,5 ppm, und in Bezug auf 5-Chloro-2-methyl-4-isothiazolin (CIT) weniger als 0,5 ppm sowie in Bezug auf Methylisothiazolinon (MIT) weniger als 1,5 ppm.

Überraschend hat sich gezeigt, dass die erfindungsgemäßen wässrigen Beschichtungsmassen auch dann eine ausreichend hohe Lagestabilität aufweisen, die mit einer langanhaltenden pH-Stabilität im Alkalischen, insbesondere auch bei pH-Werten im Bereich von 10,5 bis 12,0, einhergeht, wenn diese im Wesentlichen frei von Wasserglas oder im Wesentlichen frei von Alkalialkylsilikonaten sind. Besonders überraschend war hierbei auch, dass sowohl auf Wasserglas als auch auf Alkalialkylsilikonate verzichtet werden kann.

Der erfindungsgemäße wässrige Beschichtungsstoff stellt bevorzugt eine Dispersionsfarbe, insbesondere für Innenräume, dar.

Erfindungsgemäße Dispersionsfarben umfassen oder insbesondere bestehen dabei bevorzugt aus
1 bis 30 Gew.-%, bevorzugt 2 bis 20 Gew.-%, an dem mindestens einen polymeren organischen Bindemittel auf Dispersionsbasis (Komponente a)), insbesondere umfassend Vinylacetat/Ethylen-Copolymere und/oder Styrol/Acrylat-Copolymere,
0,001 bis 8 Gew.-%, bevorzugt 0,1 bis 4 Gew.-%, an dem mindestens einen Alumino-Hydroxokomplex (Komponente b)), insbesondere umfassend oder bevorzugt bestehend aus Na[Al(OH)4],
0,001 bis 20 Gew.-%, bevorzugt 0,1 bis 10 Gew.-%, an dem mindestens einen Additiv (Komponente c)),
15 bis 80 Gew.-%, bevorzugt 25 bis 70 Gew.-%, an Wasser (Komponente d)),
1 bis 60 Gew.-%, bevorzugt 10 bis 55 Gew.-%, an dem mindestens einen Füllstoff (Komponente e)), insbesondere umfassend oder vorzugsweise bestehend aus silikatischen Füllstoffen,
0,1 bis 35 Gew.-%, bevorzugt 1 bis 30 Gew.-%, an dem mindestens einen Pigment (Komponente f),
0 bis 20 Gew.-%, bevorzugt 0,1 bis 10 Gew.-%, an dem mindestens einen Verdicker (Komponente g),
0,01 bis 15 Gew.-%, bevorzugt 0,1 bis 10 Gew.-%, an dem mindestens einen Dispergiermittel (Komponente h) und/oder, insbesondere und,
0 bis 5 Gew.-%, bevorzugt 0 bis 2 Gew.-%, an dem mindestens einen Faserstoff (Komponente i),
wobei die die Dispersionsfarbe bildenden Komponenten stets 100,0 Gew.-% ergeben.

Besonders bevorzugt sind dabei solche Dispersionsfarben, enthaltend oder insbesondere bestehend aus
2 bis 20 Gew.-% an dem mindestens einen polymeren organischen Bindemittel auf Dispersionsbasis (Komponente a)), insbesondere umfassend Vinylacetat/Ethylen-Copolymere und/oder Styrol/Acrylat-Copolymere,
0,1 bis 4 Gew.-% an dem mindestens einen Alumino-Hydroxokomplex (Komponente b)), insbesondere umfassend oder bevorzugt bestehend aus Na[Al(OH)4],
0,1 bis 10 Gew.-% an dem mindestens einen Additiv (Komponente c)),
25 bis 70 Gew.-% an Wasser (Komponente d)),
10 bis 55 Gew.-% an dem mindestens einen Füllstoff (Komponente e)), insbesondere umfassend oder vorzugsweise bestehend aus silikatischen Füllstoffen,
1 bis 30 Gew.-% an dem mindestens einen Pigment (Komponente f),
0,1 bis 10 Gew.-% an dem mindestens einen Verdicker (Komponente g),
0,1 bis 10 Gew.-% an dem mindestens einen Dispergiermittel (Komponente h) und
0 bis 2 Gew.-% an dem mindestens einen Faserstoff (Komponente i),
wobei die die Dispersionsfarbe bildenden Komponenten stets 100,0 Gew.-% ergeben.

Gemäß einer weiteren bevorzugten Ausgestaltung stellen die erfindungsgemäßen wässrigen Beschichtungsstoffe einen Kleber, insbesondere Vlieskleber, dar.

Erfindungsgemäße Kleber umfassen oder insbesondere bestehen dabei bevorzugt aus
0,5 bis 45 Gew.-%, bevorzugt 0,5 bis 20 Gew.-% und besonders bevorzugt 2 bis 10 Gew.-%, an dem mindestens einen polymeren organischen Bindemittel auf Dispersionsbasis (Komponente a)), insbesondere umfassend Vinylacetat/Ethylen-Copolymere und/oder Styrol/Acrylat-Copolymere,
0,001 bis 8 Gew.-%, bevorzugt 0,1 bis 4 Gew.-%, an dem mindestens einen Alumino-Hydroxokomplex (Komponente b)), insbesondere umfassend oder bevorzugt bestehend aus Na[Al(OH)4],
0,001 bis 20 Gew.-%, bevorzugt 0,1 bis 10 Gew.-%, an dem mindestens einen Additiv (Komponente c)),
10 bis 92 Gew.-%, bevorzugt 15 bis 87 Gew.-%, an Wasser (Komponente d)),
0 bis 40 Gew.-%, bevorzugt 1 bis 20 Gew.-%, an dem mindestens einen Füllstoff (Komponente e)), insbesondere umfassend oder vorzugsweise bestehend aus silikatischen Füllstoffen,
0 bis 10 Gew.-%, bevorzugt 0 bis 5 Gew.-%, an dem mindestens einen Pigment (Komponente f),
0 bis 20 Gew.-%, bevorzugt 0,1 bis 10 Gew.-%, an dem mindestens einen Verdicker (Komponente g),
0 bis 15 Gew.-%, bevorzugt 0,1 bis 10 Gew.-%, an dem mindestens einen Dispergiermittel (Komponente h) und/oder, insbesondere und,
0 bis 12 Gew.-%, bevorzugt 0 bis 7 Gew.-%, an dem mindestens einen Faserstoff (Komponente i),
wobei die den Kleber bildenden Komponenten stets 100,0 Gew.-% ergeben.

Besonders bevorzugt sind dabei solche Kleber, enthaltend oder insbesondere bestehend aus
0,5 bis 20 Gew.-%, bevorzugt 2 bis 10 Gew.-% an dem mindestens einen polymeren organischen Bindemittel auf Dispersionsbasis (Komponente a)), insbesondere umfassend Vinylacetat/Ethylen-Copolymere und/oder Styrol/Acrylat-Copolymere,
0,1 bis 4 Gew.-% an dem mindestens einen Alumino-Hydroxokomplex (Komponente b)), insbesondere umfassend oder vorzugsweise bestehend aus Na[Al(OH)4],
0,1 bis 10 Gew.-% an dem mindestens einen Additiv (Komponente c)),
15 bis 87 Gew.-% an Wasser (Komponente d)),
1 bis 20 Gew.-% an dem mindestens einen Füllstoff (Komponente e)), insbesondere umfassend oder vorzugsweise bestehend aus silikatischen Füllstoffen,
0 bis 5 Gew.-% an dem mindestens einen Pigment (Komponente f),
0,1 bis 10 Gew.-% an dem mindestens einen Verdicker (Komponente g),
0,1 bis 10 Gew.-% an dem mindestens einen Dispergiermittel (Komponente h) und
0 bis 7 Gew.-% an dem mindestens einen Faserstoff (Komponente i),
wobei die den Kleber bildenden Komponenten stets 100,0 Gew.-% ergeben.Es hat sich überraschend gezeigt, dass Alumino-Hydroxokomplexe in wässrigen Beschichtungsstoffen, insbesondere in alkalischen wässrigen Beschichtungsstoffen, als pH-Puffer eingesetzt werden können. Sie eignen sich demgemäß zur pH-Stabilisierung in solchen wässrigen Beschichtungsstoffen. Als pH-Puffer wird hierbei bevorzugt auf derartige Alumino-Hydroxokomplex mit einem pKs-Wert in Wasser im Bereich von 10,5 bis 12,5 bei 23 °C zurückgegriffen. Eine besonders ausgeprägte pH-Pufferwirkung wird hierbei überraschend bei wässrigen Beschichtungsstoffen, insbesondere den erfindungsgemäßen wässrigen Beschichtungsstoffen, beobachtet, die einen pH-Wert im Bereich von 10,0 bis 12,5, vorzugsweise im Bereich von 10,5 bis 12,0, aufweisen. Als besonders geeignete pH-Puffersubstanzen greift man hierfür bevorzugt auf Alumino-Hydroxokomplexe der Formel Mx[Al(OH)y]_{z} zurück mit M = Na, K und/oder Ca und 1 ≥ x ≤ 6, 4 ≥ y ≤ 6 und 1 ≥ z ≤ 2, wobei Na[Al(OH)_{4]} besonders bevorzugt ist.

Die der Erfindung zugrunde liegende Aufgabe wird ferner gelöst durch eine Beschichtung, erhalten oder erhältlich aus dem erfindungsgemäßen Beschichtungsstoff.

Auch wird die der Erfindung zugrunde liegende Aufgabe gelöst durch ein Substrat enthaltend eine beschichtbare Oberfläche und auf dieser beschichtbaren Oberfläche die erfindungsgemäße Beschichtung.

Die Erfindung wird des Weiteren anhand der nachfolgend aufgeführten Beispielformulierungen erläutert. Diese begrenzen den Gegenstand der Erfindung jedoch keineswegs.

| **Komponenten** | **Bsp. 1** | **Bsp. 2** | **Bsp. 3** |
|---|---|---|---|
| Wasser | 40,5 | 41,2 | 84,4 |
| Hydroxyethylcellulose (Verdicker) | 0,45 | 0,30 | 3,3¹⁾ |
| NaOH | - | - | - |
| Polyacrylsäure (Dispergiermittel) | 0,20 | 0,25 | - |
| Aminderivat (Stabilisator) | 0,30 | 0,10 | - |
| Entschäumer (auf Polymerbasis) | 0,050 | 0,20 | 0,10 |
| Titandioxid (Rutil; Pigment) | 2,0 | 25 | - |
| Calciumcarbonat (Füllstoff) | 52 | - | - |
| Schichtsilikate (Füllstoffe) | 1,0 | 19 | 5,0 |
| silikatische Mattierungsmittel | - | 3,0 | - |
| PU-modifizierte Polymere (Assoziativverdicker) | - | 0,10 | - |
| Polymerdispersion (Styrolacrylat; Bindemittel) | 3,0 | 9,0 | 6,5²⁾ |
| Kaliwasserglas | - | - | - |
| Kaliummethylsilikonat | - | - | - |
| Natriumaluminat (NaA-lO₂)³⁾ | 0,48 | 0,76 | 0,70 |
| Wachs | - | 1,0 | - |
| pH-Wert ⁴⁾ | 12,0 | 12,0 | 11,4 |

| | | | |
|---|---|---|---|
| ¹⁾ als Verdicker wurde Methylhydroxyethylcellulose eingesetzt; ²⁾ als Bindemittel wurde Vinylacetat/Ethylen-Copolymer eingesetzt; ³⁾ NaAlO₂ reagiert mit Wasser zu dem Alumino-Hydroxokomplex Na[Al(OH)4], der gut wasserlöslich ist; ⁴⁾ ermittelt gemäß DIN 55659-1:2012-1 bei einer Temperatur von 23 ± 2 °C. | | | |

Während die Formulierungen gemäß dem Beispiel 1 und 2 sich als Innenfarben eignen, kann die Formulierung gemäß dem Beispiel 3 insbesondere auch als Kleberbeschichtungsmasse zum Beispiel zum Anbringen von Gewebe-, Vlies- oder Papiertapeten eingesetzt werden. Die erfindungsgemäßen Formulierungen zeichnen sich durch gute Verarbeitbarkeit und hinreichende Konsistenz sowie pH-Stabilität aus, wobei diese Eigenschaften ausgehend von Beispiel 1 über Beispiel 2 hin zu Beispiel 3 fortlaufend besser werden.

Der Erfindung liegt die überraschende Erkenntnis zugrunde, dass sich die erfindungsgemäßen wässrigen Beschichtungsstoffe durch die Anwesenheit von Alumino-Hydroxokomplexen im Alkalischen über einen längeren Zeitraum sehr pH-stabil zeigen. Es lassen sich mit der vorliegenden Erfindung biozidfreie alkalische Beschichtungsstoffe mit ausreichender Lagerstabilität erhalten, die gleichwohl das Wachstum von Mikroorganismen nicht zulassen bzw. verhindern oder unterdrücken. Von besonderem Vorteil ist ebenfalls, dass mit den erfindungsgemäßen wässrigen Beschichtungsstoffen sichergestellt werden kann, dass die Zugabe einer überschüssigen Menge an einem basischen pH-Einstellmittel nicht zwangsläufig zu einem zu hohen pH-Wert der Formulierung führt. Auf diese Weise kann verhindert werden, dass man zu wässrigen Beschichtungsstoffen gelangt, die einer Kennzeichnungspflicht unterliegen oder die möglicherweise nicht mehr ohne besondere Vorkehrungen zu handhaben sind.

Die in der voranstehenden Beschreibung und den Ansprüchen offenbarten Merkmale der Erfindung können sowohl einzeln als auch in jeder beliebigen Kombination für die Verwirklichung der Erfindung in ihren verschiedenen Ausführungsformen wesentlich sein.

## Patentansprüche

1. Wässriger Beschichtungsstoff mit einem pH-Wert im Bereich von 8,5 bis 12,5, vorzugsweise mit einem pH-Wert im Bereich von 10,5 bis 12,0, oder eingestellt auf einen pH-Wert im Bereich von 8,5 bis 12,5, vorzugsweise auf einen pH-Wert im Bereich von 10,5 bis 12,0, bestehend aus oder umfassend
a) mindestens ein polymeres organisches Bindemittel auf Dispersionsbasis,
b) mindestens einen Alumino-Hydroxokomplex,
c) mindestens ein Additiv und
d) Wasser sowie
e) gegebenenfalls mindestens einen Füllstoff.

2. Wässriger Beschichtungsstoff nach Anspruch 1, ferner umfassend
f) mindestens ein Pigment,
g) mindestens einen Verdicker,
h) mindestens ein Dispergiermittel und/oder
i) mindestens einen Faserstoff.

3. Wässriger Beschichtungsstoff nach Anspruch 1 oder 2, **dadurch gekennzeichnet,**
**dass**
der mindestens eine Füllstoff einen anorganischen carbonatischen Füllstoff und/oder silikatischen Füllstoff umfasst.

4. Wässriger Beschichtungsstoff nach einem der Ansprüche 1 bis 3, **dadurch**
**gekennzeichnet, dass**
dieser im Wesentlichen frei von Carbonaten ist.

5. Wässriger Beschichtungsstoff nach einem der vorangehenden Ansprüche, **dadurch**
**gekennzeichnet, dass**
das polymere organische Bindemittel auf Dispersionsbasis ausgewählt ist aus der Gruppe bestehend aus Vinylacetat/Ethylen-Copolymeren, Copolymeren auf Basis von Vinylaromaten, insbesondere gebildet aus Styrol und (Meth)acrylaten, Copolymeren auf Basis von Acrylaten und gegebenenfalls Methacrylaten, insbesondere Reinacrylate, und beliebigen Mischungen hiervon, sowie insbesondere Vinylacetat/Ethylen-Copolymere und/oder Copolymere auf Basis von Vinylaromaten, insbesondere Styrol, und (Meth)acrylaten umfasst.

6. Wässriger Beschichtungsstoff nach einem der vorangehenden Ansprüche, **dadurch**
**gekennzeichnet, dass**
der mindestens eine Alumino-Hydroxokomplex einen pKs-Wert in Wasser im Bereich von 10,5 bis 12,5 bei 23 °C aufweist.

7. Wässriger Beschichtungsstoff nach einem der vorangehenden Ansprüche, **dadurch**
**gekennzeichnet, dass**
der mindestens eine Alumino-Hydroxokomplex eine Verbindung der Formel Mx[Al(OH)y]_{z} mit M = Na, K und/oder Ca und 1 ≥ x ≤ 6,4 ≥ y ≤ 6 und 1 ≥ z ≤ 2, insbesondere Na[AI(OH)₄], umfasst oder darstellt.

8. Wässriger Beschichtungsstoff nach einem der vorangehenden Ansprüche, **dadurch**
**gekennzeichnet, dass**
das mindestens eine Additiv Entschäumer, Stabilisatoren, Hydrophobierungsmittel, Wachse, Mattierungsmittel, insbesondere ausgewählt aus der Gruppe bestehend aus Kieselsäure, insbesondere Fällungskieselsäure, Aluminiumnatriumsalzen, Diatomene und beliebigen Mischungen hiervon, oder beliebige Mischungen hiervon umfasst.

9. Wässriger Beschichtungsstoff nach Anspruch 8, **dadurch gekennzeichnet, dass** das Hydrophobierungsmittel ausgewählt ist aus der Gruppe bestehend aus Alkylalkoxysilanen, Alkylalkoxysiloxanen, wasserlöslichen Alkysilikonaten, Monoalkylsilantriol, Dialkylsilandiol, Trialkylsilanol, den Alkalisalzen von Monoalkylsilantriol, Dialkylsilandiol und Trialkylsilanol, und beliebigen Mischungen hiervon.

10. Wässriger Beschichtungsstoff nach einem der Ansprüche 2 bis 9, **dadurch**
**gekennzeichnet, dass**
der Verdicker ausgewählt ist aus der Gruppe bestehend aus Polyacrylat-Verdickern, Polyurethan-Verdickern, Polyharnstoff-Verdickern, Cellulose-Verdickern, insbesondere Hydroxyethylcellulose, Methylhydroxyethylcellulose und/oder Methylcellulose, Polyvinylalkohol-Verdickern, Polyetherpolyol-Verdickern, Assoziativverdickern, insbesondere Polyurethan-modifizierten Assoziativverdickern, Schichtsilikat-Verdickern, Polysaccharid-Verdickern, insbesondere Xanthan, und beliebigen Mischungen hiervon, sowie insbesondere Polyurethan-Verdicker, Cellulose-Verdicker und/oder Polyurethan-modifizierte Assoziativverdicker umfasst oder hieraus besteht.

11. Wässriger Beschichtungsstoff nach einem der Ansprüche 2 bis 10, **dadurch**
**gekennzeichnet, dass**
das Dispergiermittel mindestens ein polyanionisches Dispergiermittel umfasst, insbesondere ausgewählt aus der Gruppe bestehend aus Polycarboxylaten, insbesondere Salze von Polyacrylsäuren, Polyphosphaten, insbesondere lineare Polyphosphate und/oder zyklische Metaphosphate, und beliebigen Mischungen hiervon, vorzugsweise Salzen von Polyacrylsäuren.

12. Wässriger Beschichtungsstoff nach einem der vorangehenden Ansprüche, **dadurch**
**gekennzeichnet, dass**
dieser im Wesentlichen frei von Konservierungsmitteln und/oder im Wesentlichen frei von Wasserglas und/oder im Wesentlichen frei von Alkalialkylsilikonaten, bevorzugt im Wesentlichen frei von Konservierungsmitteln und im Wesentlichen frei von Wasserglas, ist.

13. Wässriger Beschichtungsstoff nach einem der vorangehenden Ansprüche, **dadurch**
**gekennzeichnet, dass**
dieser eine Dispersionsfarbe, insbesondere für Innenräume, darstellt.

14. Wässriger Beschichtungsstoff in Form einer Dispersionsfarbe nach Anspruch 13, umfassend
1 bis 30 Gew.-%, bevorzugt 2 bis 20 Gew.-%, an dem mindestens einen polymeren organischen Bindemittel auf Dispersionsbasis (Komponente a)),
0,001 bis 8 Gew.-%, bevorzugt 0,1 bis 4 Gew.-%, an dem mindestens einen Alumino-Hydroxokomplex (Komponente b)),
0,001 bis 20 Gew.-%, bevorzugt 0,1 bis 10 Gew.-%, an dem mindestens einen Additiv (Komponente c)),
15 bis 80 Gew.-%, bevorzugt 25 bis 70 Gew.-%, an Wasser (Komponente d)),
1 bis 60 Gew.-%, bevorzugt 10 bis 55 Gew.-%, an dem mindestens einen Füllstoff (Komponente e)),
0,1 bis 35 Gew.-%, bevorzugt 1 bis 30 Gew.-%, an dem mindestens einen Pigment (Komponente f),
0 bis 20 Gew.-%, bevorzugt 0,1 bis 10 Gew.-%, an dem mindestens einen Verdicker (Komponente g),
0,01 bis 15 Gew.-%, bevorzugt 0,1 bis 10 Gew.-%, an dem mindestens einen Dispergiermittel (Komponente h) und/oder, insbesondere und,
0 bis 5 Gew.-%, bevorzugt 0 bis 2 Gew.-%, an dem mindestens einen Faserstoff (Komponente i),
wobei die die Dispersionsfarbe bildenden Komponenten stets 100,0 Gew.-% ergeben.

15. Wässriger Beschichtungsstoff nach einem der Ansprüche 1 bis 12, **dadurch**
**gekennzeichnet, dass**
dieser einen Kleber, insbesondere Vlieskleber, darstellt.

16. Wässriger Beschichtungsstoff in Form eines Klebers nach Anspruch 15, umfassend
0,5 bis 45 Gew.-%, bevorzugt 0,5 bis 20 Gew.-%, an dem mindestens einen polymeren organischen Bindemittel auf Dispersionsbasis (Komponente a)),
0,001 bis 8 Gew.-%, bevorzugt 0,1 bis 4 Gew.-%, an dem mindestens einen Alumino-Hydroxokomplex (Komponente b)),
0,001 bis 20 Gew.-%, bevorzugt 0,1 bis 10 Gew.-%, an dem mindestens einen Additiv (Komponente c)),
10 bis 92 Gew.-%, bevorzugt 15 bis 87 Gew.-%, an Wasser (Komponente d)),
0 bis 40 Gew.-%, bevorzugt 1 bis 20 Gew.-%, an dem mindestens einen Füllstoff (Komponente e)),
0 bis 10 Gew.-%, bevorzugt 0 bis 5 Gew.-%, an dem mindestens einen Pigment (Komponente f),
0 bis 20 Gew.-%, bevorzugt 0,1 bis 10 Gew.-%, an dem mindestens einen Verdicker (Komponente g),
0 bis 15 Gew.-%, bevorzugt 0,1 bis 10 Gew.-%, an dem mindestens einen Dispergiermittel (Komponente h) und/oder, insbesondere und,
0 bis 12 Gew.-%, bevorzugt 0 bis 7 Gew.-%, an dem mindestens einen Faserstoff (Komponente i),
wobei die den Kleber bildenden Komponenten stets 100,0 Gew.-% ergeben.

17. Verwendung von Alumino-Hydroxokomplexen als pH-Puffer, insbesondere in wässrigen Beschichtungsstoffen, vorzugsweise gemäß einem der Ansprüche 1 bis 16, und/oder zur pH-Stabilisierung von wässrigen Beschichtungsstoffen, vorzugsweise gemäß einem der Ansprüche 1 bis 16.

18. Verwendung nach Anspruch 17, **dadurch gekennzeichnet, dass**
der Alumino-Hydroxokomplex einen pKs-Wert in Wasser im Bereich von 10,5 bis 12,5 bei 23 °C aufweist und/oder dass der wässrige Beschichtungsstoff einen pH-Wert im Bereich von 10,0 bis 12,5, vorzugsweise im Bereich von 10,5 bis 12,0, aufweist.

19. Verwendung nach Anspruch 17 oder 18, **dadurch gekennzeichnet, dass**
der Alumino-Hydroxokomplex eine Verbindung der Formel Mx[Al(OH)y]_{z} mit M = Na, K und/oder Ca und 1 ≥ x ≤ 6,4 ≥ y ≤ 6 und 1 ≥ z ≤ 2, insbesondere Na[AI(OH)4], umfasst oder darstellt.

20. Beschichtung, erhalten oder erhältlich aus einem Beschichtungsstoff nach einem der Ansprüche 1 bis 16.

21. Substrat enthaltend eine beschichtbare Oberfläche und auf dieser beschichtbaren Oberfläche eine Beschichtung nach Anspruch 20.

## Claims

1. An aqueous coating material having a pH-value in the range of 8.5 to 12.5, preferably having a pH-value in the range of 10.5 to 12.0, or adjusted to a pH-value in the range of 8.5 to 12.5, preferably to a pH-value in the range of 10.5 to 12.0, consisting of or comprising
a) at least one dispersion-based polymeric organic binder,
b) at least one alumino-hydroxocomplex,
c) at least one additive and
d) water, and
e) optionally at least one filler.

2. The aqueous coating material according to claim 1, further comprising
f) at least one pigment,
g) at least one thickener,
h) at least one dispersant and/or
i) at least one fibrous material.

3. The aqueous coating material according to claim 1 or 2, **characterized in that** the at least one filler comprises an inorganic carbonate filler and/or silicate filler.

4. The aqueous coating material according to any one of claims 1 to 3, **characterized in that**
it is substantially free of carbonates.

5. The aqueous coating material according to any one of the preceding claims,
**characterized in that**
the dispersion-based polymeric organic binder is selected from the group consisting of vinyl acetate/ethylene copolymers, copolymers based on vinyl aromatics, in particular formed from styrene and (meth)acrylates, copolymers based on acrylates and optionally methacrylates, in particular pure acrylates, and any mixtures thereof, and in particular comprises vinyl acetate/ethylene copolymers and/or copolymers based on vinyl aromatics, in particular styrene, and (meth)acrylates.

6. The aqueous coating material according to any one of the preceding claims,
**characterized in that**
the at least one alumino-hydroxocomplex has a pKs-value in water in the range from 10.5 to 12.5 at 23°C.

7. The aqueous coating material according to any one of the preceding claims,
**characterized in that**
the at least one alumino-hydroxocomplex comprises or represents a compound of the formula Mx[Al(OH)y]_{z} with M = Na, K and/or Ca and 1 ≥ x ≤ 6, 4 ≥ y ≤ 6 and 1 ≥ z ≤ 2, in particular Na[Al(OH)₄].

8. The aqueous coating material according to any one of the preceding claims,
**characterized in that**
the at least one additive comprises defoamers, stabilizers, hydrophobizing agents, waxes, matting agents, in particular selected from the group consisting of silica, in particular precipitated silica, aluminum sodium salts, diatoms and any mixtures thereof, or any mixtures thereof.

9. The aqueous coating material according to claim 8, **characterized in that**
the hydrophobizing agent is selected from the group consisting of alkylalkoxysilanes, alkylalkoxysiloxanes, water-soluble alkylsiliconates, monoalkylsilanetriol, dialkylsilanediol, trialkylsilanol, the alkali metal salts of monoalkylsilanetriol, dialkylsilanediol and trialkylsilanol, and any mixtures thereof.

10. The aqueous coating material according to any one of claims 2 to 9, **characterized in that**
the thickener is selected from the group consisting of polyacrylate thickeners, polyurethane thickeners, polyurea thickeners, cellulose thickeners, in particular hydroxyethylcellulose, methylhydroxyethylcellulose and/or methylcellulose, polyvinyl alcohol thickeners, polyether polyol thickeners, associative thickeners, in particular polyurethane-modified associative thickeners, sheet silicate thickeners, polysaccharide thickeners, in particular xanthan gum, and any mixtures thereof, and in particular comprises or consists of polyurethane thickeners, cellulose thickeners and/or polyurethane-modified associative thickeners.

11. The aqueous coating material according to any one of claims 2 to 10, **characterized in that**
the dispersant comprises at least one polyanionic dispersant, in particular selected from the group consisting of polycarboxylates, in particular salts of polyacrylic acids, polyphosphates, in particular linear polyphosphates and/or cyclic metaphosphates, and any mixtures thereof, preferably salts of polyacrylic acids.

12. The aqueous coating material according to any one of the preceding claims,
**characterized in that**
it is substantially free of preservatives and/or substantially free of water glass and/or substantially free of alkali alkyl siliconates, preferably substantially free of preservatives and substantially free of water glass.

13. The aqueous coating material according to any one of the preceding claims,
**characterized in that**
it represents a dispersion paint, in particular for interior rooms.

14. The aqueous coating material in the form of a dispersion paint according to claim 13, comprising
1 to 30 wt.-%, preferably 2 to 20 wt.-%, of the at least one dispersion-based polymeric organic binder (component a)),
0.001 to 8 wt.-%, preferably 0.1 to 4 wt.-%, of the at least one alumino-hydroxocomplex (component b)),
0.001 to 20 wt.-%, preferably 0.1 to 10 wt.-%, of the at least one additive (component c)),
15 to 80 wt.-%, preferably 25 to 70 wt.-%, of water (component d)),
1 to 60 wt.-%, preferably 10 to 55 wt.-%, of the at least one filler (component e)),
0.1 to 35 wt.-%, preferably 1 to 30 wt.-%, of the at least one pigment (component f),
0 to 20 wt.-%, preferably 0.1 to 10 wt.-%, of the at least one thickener (component g),
0.01 to 15 wt.-%, preferably 0.1 to 10 wt.-%, of the at least one dispersant (component h) and/or, in particular and,
0 to 5 wt.-%, preferably 0 to 2 wt.-%, of the at least one fibrous material (component i),
wherein the components forming the dispersion paint always add up 100.0 wt.-%.

15. The aqueous coating material according to any one of claims 1 to 12, **characterized in that**
it represents an adhesive, in particular a non-woven adhesive.

16. The aqueous coating material in the form of an adhesive according to claim 15, comprising
0.5 to 45 wt.-%, preferably 0.5 to 20 wt.-%, of the at least one dispersion-based polymeric organic binder (component a)),
0.001 to 8 wt.-%, preferably 0.1 to 4 wt.-%, of the at least one alumino-hydroxocomplex (component b)),
0.001 to 20 wt.-%, preferably 0.1 to 10 wt.-%, of the at least one additive (component c)),
10 to 92 wt.-%, preferably 15 to 87 wt.-%, of water (component d)),
0 to 40 wt.-%, preferably 1 to 20 wt.-%, of the at least one filler (component e)),
0 to 10 wt.-%, preferably 0 to 5 wt.-%, of the at least one pigment (component f),
0 to 20 wt.-%, preferably 0.1 to 10 wt.-%, of the at least one thickener (component g),
0 to 15 wt.-%, preferably 0.1 to 10 wt.-%, of the at least one dispersant (component h) and/or, in particular and,
0 to 12 wt.-%, preferably 0 to 7 wt.-%, of the at least one fibrous material (component i),
wherein the components forming the adhesive always add up 100.0 wt.-%.

17. The use of alumino-hydroxocomplexes as pH-buffers, in particular in aqueous coating materials, preferably according to any one of claims 1 to 16, and/or for pH stabilization of aqueous coating materials, preferably according to any one of claims 1 to 16.

18. The use according to claim 17, **characterized in that**
the alumino-hydroxocomplex has a pKs-value in water in the range of 10.5 to 12.5 at 23°C and/or that the aqueous coating material has a pH-value in the range of 10.0 to 12.5, preferably in the range of 10.5 to 12.0.

19. The use according to claim 17 or 18, **characterized in that**
the alumino-hydroxocomplex comprises or represents a compound of the formula Mx[Al(OH)y]_{z} with M = Na, K and/or Ca and 1 ≥ x ≤ 6,4 ≥ y ≤ 6 and 1 ≥ z ≤ 2, in particular Na[Al(OH)₄].

20. Coating, obtained or obtainable from a coating material according to any one of claims 1 to 16.

21. Substrate containing a coatable surface and a coating according to claim 20 on this coatable surface.

## Revendications

1. Matériaux de revêtement aqueux ayant un pH dans la plage de 8,5 à 12,5, de préférence ayant un pH dans la plage de 10,5 à 12,0, ou ajusté à un pH dans la plage de 8,5 à 12,5, de préférence à un pH dans la plage de 10,5 à 12,0, constitué de ou comprenant
a) au moins un liant organique polymère à base de dispersion,
b) au moins un complexe alumino-hydroxo,
c) au moins un additif, et
d) de l'eau, et
e) éventuellement au moins une charge.

2. Matériaux de revêtement aqueux selon la revendication 1, comprenant en outre
f) au moins un pigment,
g) au moins un épaississant,
h) au moins un dispersant et/ou
i) au moins une matière fibreuse.

3. Matériaux de revêtement aqueux selon la revendication 1 ou 2, **caractérisé en ce que** l'au moins une charge comprend une charge carbonatée inorganique et/ou une charge silicatée.

4. Matériaux de revêtement aqueux selon l'une quelconque des revendications 1 à 3, **caractérisé en ce que**
celui-ci est essentiellement exempt de carbonates.

5. Matériaux de revêtement aqueux selon l'une quelconque des revendications précédentes, **caractérisé en ce que**
le liant organique polymère à base de dispersion est choisi dans le groupe constitué de copolymères d'acétate de vinyle/éthylène, de copolymères à base de composés aromatiques de vinyle, en particulier formés de styrène et de (méth)acrylates, de copolymères à base d'acrylates et éventuellement de méthacrylates, en particulier d'acrylates purs, et de mélanges quelconques de ceux-ci, ainsi qu'en particulier comprend de copolymères d'acétate de vinyle/éthylène et/ou de copolymères à base de composés aromatiques de vinyle, en particulier de styrène, et de (méth)acrylates.

6. Matériaux de revêtement aqueux selon l'une quelconque des revendications précédentes, **caractérisé en ce que**
l'au moins un complexe alumino-hydroxo a une valeur de pKs dans l'eau dans la plage de 10,5 à 12,5 à 23 °C.

7. Matériaux de revêtement aqueux selon l'une quelconque des revendications précédentes, **caractérisé en ce que**
l'au moins un complexe alumino-hydroxo comprend ou représente un composé de formule Mx[Al(OH)y]_{z} avec M = Na, K et/ou Ca et 1 ≥ x ≤ 6,4 ≥ y ≤ 6 et 1 ≥ z ≤ 2, en particulier Na[Al(OH)₄].

8. Matériaux de revêtement aqueux selon l'une quelconque des revendications précédentes, **caractérisé en ce que**
l'au moins un additif comprend des antimousses, des stabilisants, des agents hydrophobes, des cires, des agents matifiants, en particulier choisis dans le groupe constitué de la silice, en particulier de la silice précipitée, des sels d'aluminium et de sodium, des diatomées et des mélanges quelconques de ceux-ci, ou des mélanges quelconques de ceux-ci.

9. Matériaux de revêtement aqueux selon la revendication 8, **caractérisé en ce que** l'agent hydrophobe est choisi dans le groupe constitué d'alkylalcoxysilanes, d'alkylalcoxysiloxanes, d'alkylsiliconates hydrosolubles, de monoalkylsilanetriol, de dialkylsilanediol, de trialkylsilanol, des sels alcalins de monoalkylsilanetriol, de dialkylsilanediol et de trialkylsilanol, et de mélanges quelconques de ceux-ci.

10. Matériaux de revêtement aqueux selon l'une quelconque des revendications 2 à 9, **caractérisé en ce que**
l'épaississant est choisi dans le groupe constitué d'épaississants de polyacrylate, d'épaississants de polyuréthane, d'épaississants de polyurée, d'épaississants de cellulose, en particulier d'hydroxyéthylcellulose, de méthylhydroxyéthylcellulose et/ou de méthylcellulose, d'épaississants d'alcool polyvinylique, d'épaississants de polyétherpolyol, d'épaississants associatifs, en particulier d'épaississants associatifs modifiés par polyuréthane, d'épaississants de phyllosilicate, d'épaississants de polysaccharide, en particulier de xanthane, et de mélanges quelconques de ceux-ci, ainsi qu'en particulier comprend ou est constitué d'épaississants de polyuréthane, d'épaississants de cellulose et/ou d'épaississants associatifs modifiés par polyuréthane.

11. Matériaux de revêtement aqueux selon l'une quelconque des revendications 2 à 10, **caractérisé en ce que**
le dispersant comprend au moins un dispersant polyanionique, en particulier choisi dans le groupe constitué de polycarboxylates, en particulier de sels d'acides polyacryliques, de polyphosphates, en particulier de polyphosphates linéaires et/ou de métaphosphates cycliques, et de mélanges quelconques de ceux-ci, de préférence de sels d'acides polyacryliques.

12. Matériaux de revêtement aqueux selon l'une quelconque des revendications précédentes, **caractérisé en ce que**
celui-ci est essentiellement exempt de conservateurs et/ou essentiellement exempt de verre soluble et/ou essentiellement exempt d'alkylsiliconates alcalins, de préférence essentiellement exempt de conservateurs et essentiellement exempt de verre soluble.

13. Matériaux de revêtement aqueux selon l'une quelconque des revendications précédentes, **caractérisé en ce que**
celui-ci représente une peinture en dispersion, en particulier pour des espaces intérieurs.

14. Matériaux de revêtement aqueux sous la forme d'une peinture en dispersion selon la revendication 13, comprenant
1 à 30 %-poids, de préférence 2 à 20 %-poids, de l'au moins un liant organique polymère à base de dispersion (composant a)),
0,001 à 8 %-poids, de préférence 0,1 à 4 %-poids, de l'au moins un complexe alumino-hydroxo (composant b)),
0,001 à 20 %-poids, de préférence 0,1 à 10 %-poids, de l'au moins un additif (composant c)),
15 à 80 %-poids, de préférence 25 à 70 %-poids, d'eau (composant d)),
1 à 60 %-poids, de préférence 10 à 55 %-poids, de l'au moins une charge (composant e)),
0,1 à 35 %-poids, de préférence 1 à 30 %-poids, de l'au moins un pigment (composant f),
0 à 20 %-poids, de préférence 0,1 à 10 %-poids, de l'au moins un épaississant (composant g),
0,01 à 15 %-poids, de préférence 0,1 à 10 %-poids, de l'au moins un dispersant (composant h) et/ou, en particulier et,
0 à 5 %-poids, de préférence 0 à 2 %-poids, de l'au moins une matière fibreuse (composant i),
les composants formant la peinture en dispersion donnant toujours 100,0 %-poids.

15. Matériaux de revêtement aqueux selon l'une quelconque des revendications 1 à 12, **caractérisé en ce que**
celui-ci représente un adhésif, en particulier un adhésif non tissé.

16. Matériaux de revêtement aqueux sous la forme d'un adhésif selon la revendication 15, comprenant
0,5 à 45 %-poids, de préférence 0,5 à 20 %-poids, de l'au moins un liant organique polymère à base de dispersion (composant a)),
0,001 à 8 %-poids, de préférence 0,1 à 4 %-poids, de l'au moins un complexe alumino-hydroxo (composant b)),
0,001 à 20 %-poids, de préférence 0,1 à 10 %-poids, de l'au moins un additif (composant c)),
10 à 92 %-poids, de préférence 15 à 87 %-poids, d'eau (composant d)),
0 à 40 %-poids, de préférence 1 à 20 %-poids, de l'au moins une charge (composant e)),
0 à 10 %-poids, de préférence 0 à 5 %-poids, de l'au moins un pigment (composant f),
0 à 20 %-poids, de préférence 0,1 à 10 %-poids, de l'au moins un épaississant (composant g),
0 à 15 %-poids, de préférence 0,1 à 10 %-poids, de l'au moins un dispersant (composant h) et/ou, en particulier et,
0 à 12 %-poids, de préférence 0 à 7 %-poids, de l'au moins une matière fibreuse (composant i),
les composants formant l'adhésif donnant toujours 100,0 %-poids.

17. Utilisation de complexes alumino-hydroxo en tant que tampon de pH, en particulier dans des matériaux de revêtement aqueux, de préférence selon l'une quelconque des revendications 1 à 16, et/ou pour la stabilisation de pH de matériaux de revêtement aqueux, de préférence selon l'une quelconque des revendications 1 à 16.

18. Utilisation selon la revendication 17, **caractérisée en ce que**
le complexe alumino-hydroxo a une valeur de pKs dans l'eau dans la plage de 10,5 à 12,5 à 23 °C et/ou **en ce que** le matériaux de revêtement aqueux a un pH dans la plage de 10,0 à 12,5, de préférence dans la plage de 10,5 à 12,0.

19. Utilisation selon la revendication 17 ou 18, **caractérisée en ce que**
le complexe alumino-hydroxo comprend ou représente un composé de formule Mx[Al(OH)y]_{z} avec M = Na, K et/ou Ca et 1 ≥ x ≤ 6,4 ≥ y ≤ 6 et 1 ≥ z ≤ 2, en particulier Na[Al(OH)₄].

20. Revêtement, obtenu ou pouvant être obtenu à partir d'un Matériaux de revêtement selon l'une quelconque des revendications 1 à 16.

21. Substrat contenant une surface pouvant être revêtue et un revêtement selon la revendication 20 sur cette surface pouvant être revêtue.
